**Europäisches Patentamt**

**European Patent Office**

**Office européen des brevets**

(11) Veröffentlichungsnummer: **0 200 967**
**A1**

# (12) EUROPÄISCHE PATENTANMELDUNG

(21) Anmeldenummer: **86105249.6**

(22) Anmeldetag: **16.04.86**

(51) Int. Cl.⁴: **A 01 C 5/06**

(30) Priorität: **24.04.85 DE 3514740**

(43) Veröffentlichungstag der Anmeldung: **12.11.86**
**Patentblatt 86/46**

(84) Benannte Vertragsstaaten: **AT BE CH DE FR GB IT LI LU NL SE**

(71) Anmelder: **A.J. Tröster GmbH + Co KG, Kaiserstrasse 9-11, D-6308 Butzbach (DE)**

(72) Erfinder: **Link, Alfred, Alte Brauerei 1, D-6308 Butzbach (DE)**
Erfinder: **Sorg, Friedrich, Am Alten Schloss 31, D-6000 Frankfurt 50 (DE)**

(74) Vertreter: **Schlagwein, Udo, Dipl.-Ing., Anwaltsbüro Ruppert & Schlagwein Bahnhofsallee 11, D-6350 Bad Nauheim (DE)**

(54) **Säschar.**

(57) Ein Säschar besteht aus einem Normalsäschar (1) und einem darauf aufgesteckten Scharkörper (8). Dieser Scharkörper (8) liegt im montierten Zustand mit einer Achse (13) in einer muldenförmigen Ausnehmung (6) an einer Unterseite des Normalsäschars (1). Dadurch ist der Scharkörper (8) relativ zum Normalsäschar (1) schwenkbar und kann durch eine durch ein Langloch (14) geführte Schraube in verschiedenen Winkelstellungen befestigt werden.

**EP 0 200 967 A1**

0200967

- 1 -

A. J. Tröster GmbH & Co KG          6308 Butzbach

### Säschar

Die Erfindung bezieht sich auf ein Säschar, bestehend
aus einem Normalsäschar und einem daran lösbar befestigten Scharkörper, insbesondere Bandsaatscharkörper, welcher mit einem Abstützstück von unten her gegen das
Normalsäschar anliegt, das Normalsäschar im vorderen
Bereich mit einer in etwa U-förmigen Tasche umgreift und
mittels einer durch beide Seitenteile der Tasche und den
vorderen Bereich des Normalsäschars geführten Schraubverbindung mit dem Normalsäschar fest verbunden ist. Ein
solches Säschar ist Gegenstand der DE-PS 33 36 147.

Für einen optimalen Wuchs des Saatgutes ist es erforderlich, daß dieses in der richtigen Tiefe abgelegt wird.
Dies wird bei dem bekannten Säschar durch eine besondere
Gestaltung des lösbar mit dem Normalsäschar verbundenen
Scharkörpers erreicht. Der Scharkörper hat eine nach
vorn ansteigende Gleitsohle, mit der er über den Boden
gleitet und dadurch eine nach oben gerichtete Kraft erzeugt, welche ein zu tiefes Einsinken des Scharkörpers
in den Boden verhindert. Durch das Gleiten der Gleitsohle wird der Boden unter ihr verfestigt. Je nach Bodenverhältnissen sinkt die Gleitsohle mehr oder weniger
stark in den Boden ein, so daß die Ablagetiefe entsprechend unterschiedlich ist. Man könnte diesem Mißstand
natürlich dadurch abhelfen, daß man für unterschiedliche
Bodenverhältnisse unterschiedliche Scharkörper vorsieht.
Eine solche Maßnahme wäre jedoch recht kostspielig, da

...

übliche Sämaschinen jeweils eine größere Anzahl von Säscharen haben, die dann alle ausgewechselt werden müßten. Außerdem könnte auch der Schardruck verstellt werden. Beides ist jedoch bei wechselnden Böden auf einem Feld ungeeignet, eine gleichmäßige Sätiefe zu erhalten.

Der Erfindung liegt die Aufgabe zugrunde, ein Säschar der eingangs genannten Art derart zu gestalten, daß auch bei unterschiedlichen Bodenverhältnissen eine optimale Ablegetiefe erzielbar ist.

Diese Aufgabe wird erfindungsgemäß dadurch gelöst, daß das Abstützstück eine Achse ist und die Schraubverbindung zum Feststellen des Scharkörpers in unterschiedliche, um die Achse verschwenkte Positionen des Scharkörpers in Bezug auf das Normalsäschar ausgebildet ist.

Durch diese Gestaltung wird es möglich, den Scharkörper in seiner Winkellage zum Erdboden zu verstellen. Dadurch wird zum Beispiel ein Gänsefußschar unterschiedlich stark in den Boden gezogen oder ein Scharkörper mit Gleitsohle unterschiedlich stark vom Boden weg kraftbeaufschlagt. Das ermöglicht es, den Scharkörper so einzustellen, daß bei den Gegebenheiten des zu bearbeitenden Bodens genau die richtige Ablagetiefe erreicht wird. Weiterhin kann man dank der Erfindung durch Verstellen des Scharkörpers die Ablagetiefe verändern und sich dadurch den Erfordernissen unterschiedlichen Saatgutes anpassen.

Besonders einfach und rasch an ein Normalsäschar montierbar ist der Scharkörper, wenn gemäß einer vorteilhaften Ausgestaltung der Erfindung die Achse von unten her in eine muldenförmige Ausnehmung in der Unterseite des Normalsäschars eingesetzt ist.

...

- 3 -

Das Verstellen des Scharkörpers könnte stufig erfolgen, indem man im Normalsäschar mehrere Löcher für die Schraubverbindung vorsieht. Eine stufenlose Verstellung kann jedoch auf einfache Weise erreicht werden, wenn in beiden Seiten der Tasche fluchtend zueinander jeweils ein um den Mittelpunkt der Achse gekrümmtes Langloch vorgesehen ist.

Die Erfindung läßt zahlreiche Ausführungsformen zu. Zur Verdeutlichung ihres Grundprinzips ist eine davon in der Zeichnung dargestellt und wird nachfolgend beschrieben. Die Zeichnung zeigt in

Fig. 1 ein erfindungsgemäß gestaltetes Normalsäschar in der Seitenansicht,

Fig. 2 ein auf das Normalsäschar aufsteckbarer Scharkörper,

Fig. 3 eine Ansicht von hinten auf den Scharkörper nach Figur 2,

Fig. 4 eine Draufsicht auf den Scharkörper nach den Figuren 2 und 3.

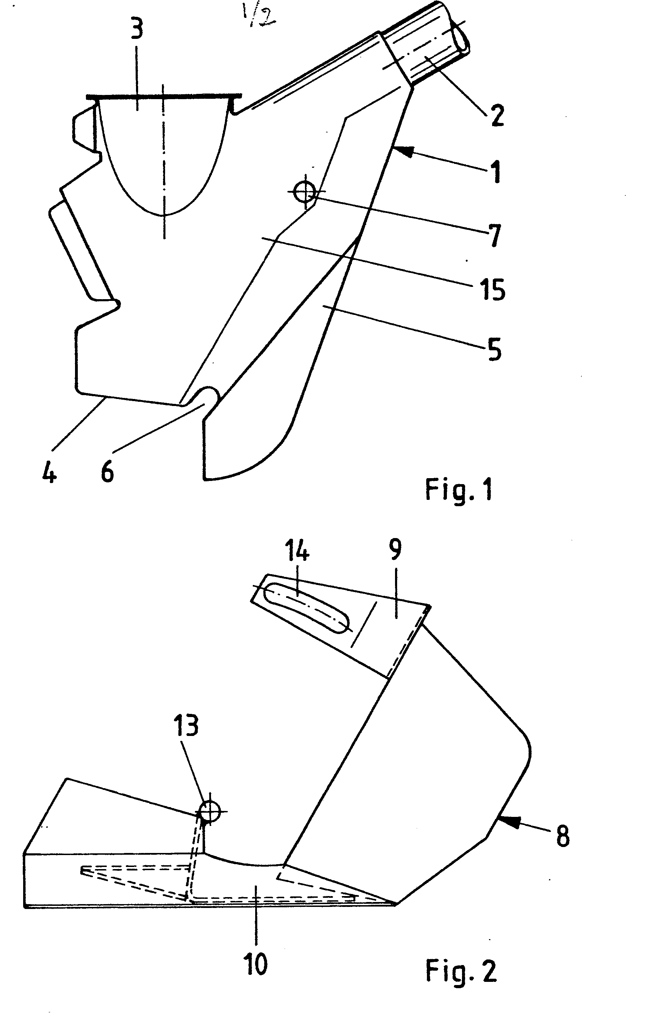

Die Figur 1 zeigt ein Normalsäschar 1, welches mittels eines Scharhalters 2 in der dargestellten, aufrechten Position an einer nicht dargestellten Sämaschine befestigt ist. An seiner Oberseite hat das Normalsäschar einen Einlauf 3 für das zu säende Saatgut. Dieses bewegt sich durch das Normalsäschar hindurch nach unten bis zu einer Saatgutauslauföffnung 4, von der aus es zu Boden in eine Säfurche fällt, die von einer keilförmigen Scharspitze 5 erzeugt wird.

...

Wichtig für die Erfindung sind eine muldenförmige Ausnehmung 6 an der Unterseite des Normalsäschars 1 in Höhe der Saatgutauslaßöffnung 4 und eine Bohrung 7, welche unterhalb des Scharhalters 2 durch Seitenteile 15 hindurch führt. Die Bedeutung der Ausnehmung 6 und der Bohrung 7 ergibt sich anhand der Figur 2.

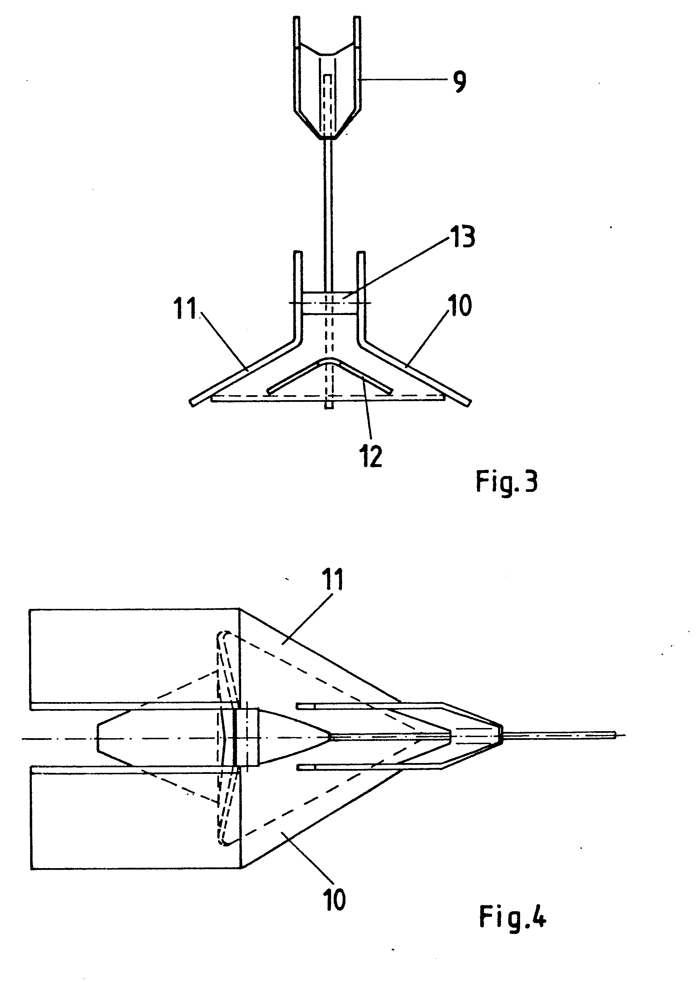

Die Figur 2 zeigt ein Scharkörper 8, der von unten her auf das Normalsäschar aufsteckbar ist. Dieser Scharkörper 8 bildet im vorderen Bereich eine Tasche 9, welche die Seitenteile 15 des Normalsäschares 1 zu umgreifen vermag. An seiner Unterseite hat der Scharkörper 8 Seitenwände 10, 11 (siehe auch Figuren 3 und 4). Zwischen diesen Seitenwänden 10, 11 befindet sich ein in Figur 3 erkennbarer Prallkörper 12, der das herunterfallende Saatgut in der gewünschten Bandbreite zu Boden gelangen läßt.

Zwischen den Seitenwänden 10, 11 ist als Abstützstück eine Achse 13 vorgesehen, die in die Ausnehmung 6 des Normalsäschars 1 zu gelangen vermag. Ist das der Fall, so greifen miteinander fluchtende Langlöcher 14 der Tasche 9 des Scharkörpers 8 über die Bohrung 7 des Normalsäschars. Eine nicht dargestellte Schraube kann dann durch diese Langlöcher 14 und die Bohrung 7 gezogen und festgeschraubt werden. Die Langlöcher 14 sind bogenförmig gekrümmt, wobei der Krümmungsmittelpunkt mit dem Mittelpunkt der Achse 13 zusammenfällt. Dadurch kann der Scharkörper 8 in einem durch die Länge der Langlöcher 14 begrenzten Bereich relativ zum Normalsäschar 1 um die Achse 13 verschwenkt werden. Die Achse 13 sollte möglichst in Höhe der Saatgutauslaßöffnung liegen, damit sich bei einem Verschwenken des Scharkörpers 8 die Höhe des Prallkörpers 12 möglichst wenig verändert.

...

Auflistung der verwendeten Bezugszeichen

   1   Normalsäschar

   2   Scharhalter

   3   Einlauf

   4   Saatgutauslaßöffnung

   5   Scharspitze

   6   Ausnehmung

   7   Bohrung

   8   Scharkörper

   9   Tasche

  10   Seitenwand

  11   Seitenwand

  12   Prallkörper

  13   Achse

  14   Langloch

  15   Seitenteil

- 6 -

Ansprüche

1. Säschar, bestehend aus einem Normalsäschar und einem daran lösbar befestigten Scharkörper, insbesondere Bandsaatscharkörper, welcher mit einem Abstützstück von unten her gegen das Normalsäschar anliegt, das Normalsäschar im vorderen Bereich mit einer in etwa U-förmigen Tasche umgreift und mittels einer durch beide Seitenteile der Tasche und den vorderen Bereich des Normalsäschars geführten Schraubverbindung mit dem Normalsäschar fest verbunden ist, dadurch gekennzeichnet, daß das Abstützstück eine Achse (13) ist und die Schraubverbindung zum Feststellen des Scharkörpers (8) in unterschiedliche um die Achse (13) verschwenkte Positionen des Scharkörpers (8) in Bezug auf das Normalsäschar (1) ausgebildet ist.

2. Säschar nach Anspruch 1, dadurch gekennzeichnet, daß die Achse (13) von unten her in eine muldenförmige Ausnehmung (6) in der Unterseite des Normalsäschars (1) eingesetzt ist.

3. Säschar nach Anspruch 1 oder 2, dadurch gekennzeichnet, daß in beiden Seiten der Tasche (9) fluchtend zueinander jeweils ein um den Mittelpunkt der Achse (13) gekrümmtes Langloch (14) vorgesehen ist.

...

0200967

Fig. 1

Fig. 2

0200967

9

13

11

10

12

Fig. 3

11

10

Fig. 4

Europäisches
Patentamt

EUROPÄISCHER RECHERCHENBERICHT

0200967

Nummer der Anmeldung

EP 86 10 5249

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 226 026 (AMAZONEN-WERKE) * Figuren 1-3; Seite 5, Zeilen 1-18 * | 1 | A 01 C 5/06 |
| | --- | | |
| A | FR-A-2 526 266 (AMAZONEN-WERKE) * Figuren 1-4; Seite 5, Zeile 1 - Seite 7, Zeile 19 * | 1,3 | |
| | --- | | |
| A | DE-C-3 336 147 (AMAZONEN-WERKE) * Figuren 1-8; Spalte 4, Zeile 50 - Spalte 7, Zeile 9 * | 1 | |
| | --- | | |
| A | US-A-1 574 955 (YACKLEY) * Figuren 1-4; Seite 1, Zeile 86 - Seite 2, Zeile 20 * | 1,2 | |
| | ----- | | RECHERCHIERTE SACHGEBIETE (Int. Cl.4) |
| | | | A 01 C |

Der vorliegende Recherchenbericht wurde für alle Patentansprüche erstellt.

| Recherchenort DEN HAAG | Abschlußdatum der Recherche 01-08-1986 | Prüfer DISSEN H.D. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82